# EUROPEAN PATENT SPECIFICATION

(11) **EP 0 453 567 B1**
(45) Date of publication and mention of the grant of the patent: **04.05.1994**
(21) Application number: 89912497.8
(22) Date of filing: 10.11.1989
(51) Int. Cl.: H02K 44/04, B63H 11/02

(54) **THRUST GENERATOR**
SCHUBERZEUGER
GENERATEUR DE POUSSEE

(43) Date of publication of application: 30.10.1991
(73) Proprietor: MUROYA, Masaaki, Toyono-Gun, Ohsaka 563-01 (JP); HIROI, Masao, Shiga 520 (JP); KOATSU GAS KOGYO CO., LTD., Ohsaka-shi, Ohsaka 530 (JP); TADA, Eiichi, Izumi-shi, Ohsaka 599-02 (JP)
(72) Inventor: TADA, Eiichi, Ohsaka 590-02 (JP)
(74) Representative: Laufhütte, Dieter, Dr.-Ing.
(86) International application number: PCT/JP89/01153
(87) International publication number: WO 91/07806

(56) References cited:
- WO-A-90/14265
- FR-A- 2 112 791
- GB-A- 889 950
- GB-A- 1 238 803
- GB-A- 1 563 170
- JP-A- 6 137 158
- JP-A-62 160 991

## Description

The present invention ralates to a thrust generator suitable for a superconducting Electro Magnetic Thruster (herinafter referred as EMT) of ship propulsion devices, a Dynamic Positioning System for ocean platforms and Electro-Magnetic pumps acting upon an electrically conductive fluid, for example, sea water and a MHD generator and pumps and generators of pumping-up power systems.

As known in the art, a dipole, quadralpol, saddle and racetrack type superconducting magnets are used for EMTs. The conventional EMTs may however be too big and too heavy to gain enough thrust of full-scale ships because of low magnetic field of such magnets and of being difficult to construct. The magnetic field must be so strong for 10 to 20 Teslas to obtain the enough propulsive efficiency of EMT ships. The EMT having such strong magnetic field may be a huge one while on an on-board EMT propulsion device is limited of its size and its weight because of restriction of hull space. Now, it is not realized that EMT propulsion units are satisfied with the size, weight, thrust force and high magnetic field. In view of this, there is an important technological problem to develop EMTs for practical use.

From FR-A-22 12 791 a thrust generator with the features of the first part of claim 1 is known.

It is the object of the present invention to supply a light weight and compact thrust generator with high thrust and high magnetic field superconducting magnets.

This object is solved by the thrust generator of the present invention according to claim 1.

The thrust generator comprises a superconducting solenoid magnet and a spiral thrust duct with a pair of electrodes inserted in the hollow interior of the superconducting solenoid magnet. The openings of the inlet and the outlet of the spiral duct are provided along the longitudinal center axis of the solenoid magnet. In the case of sea water as a conductive fluid flowing in the thrust duct, anode or a positive electrode, is arranged continuously on the inner side wall of the duct, and cathode or a negative effective electrochemical reaction area of electrode by producing hydrogen bubble at the cathode. The electrodes have the spiral shape of the thrust duct and the anode is fixed continuously on an inner side wall of said thrust duct and in the interior thereof and the cathode is arranged continuously on an opposite side wall facing the electromagnet and in the interior of said thrust duct.

It is possible to generate the maximum thrust in case of the ratio of 3.5 of outer radius to inner radius of the duct.

The thrust duct with rectangular cross section is suitable for avoiding waste of the thrust volume.

A pair of superconducting solenoid magnets are arranged in a row, making closed loop magnetic flux line, resulting in magnetic flux density generated by a pair of superconducting magnets being so much stronger than a single superconducting magnet.

It is possible that the magnetic field is perfectly shielded by mounting superconducting material films or coils at the end of EMT units.

### Brief Description of Drawings

- Fig. 1: shows a simplified cut-away drawing of a device adopting the present invention.

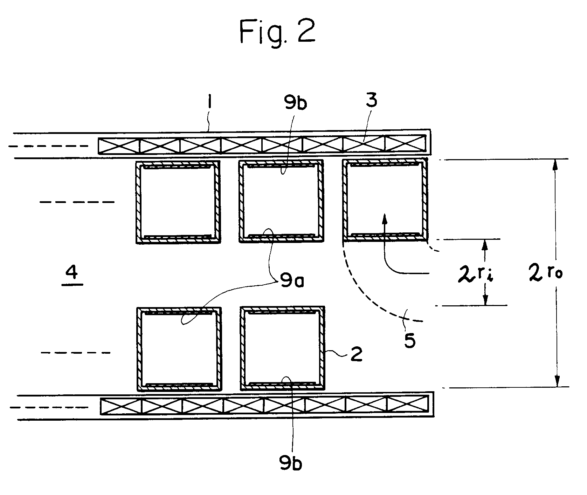

- Fig. 2: shows an enlarged detailed cross section of the thrust generator as shown in Fig. 1.
- Fig. 3: shows a general layout illustration of EMT, shown in Fig. 1, as ship propulsion systems.
- Fig. 4: shows a front view of Fig. 3.
- Fig. 5: shows a cross section of a foil as shown in Fig. 4.
- Fig. 6: shows a vector schematic of the Lorentz's forces acting on the foil of Fig. 4.
- Fig. 7: shows a general layout illustration of EMTs mounted in the hull.
- Fig. 8: shows a front view of Fig. 7.
- Fig. 9: shows a plane view of the arrangement of EMTs.

Preferred embodiments of the present invention will now be described hereinafter referring accompanying drawings. The thrust generator of the present invention has a superconducting solenoid magnet 1 and a spiral thrust duct 2. The superconducting magnet 1 provides a coil 3 winded by superconducting wires to be insulated in a highly efficient thermal container of cryostat. The superconducting solenoid magnet generates a strong magnetic field in the hollow interior 4 of the magnet (the direction of magnetic field as shown by arrow B). The superconducting solenoid magnet 1 is operating in the persistent current mode. The winding concept of the superconducting solenoid magnet 1 may be of a pancake type or of a layered type.

The thrust duct 2 is a spiral hollow one with rectangular cross section. The spiral portion of the thrust duct 2 is inserted in the hollow interior of the superconducting solenoid magnet 1. Both of an inlet 5 and an outlet 6, each having an opening 7, 8, of the thrust duct 2 extend along the longitudinal center axis 1a of the superconducting solenoid magnet 1.

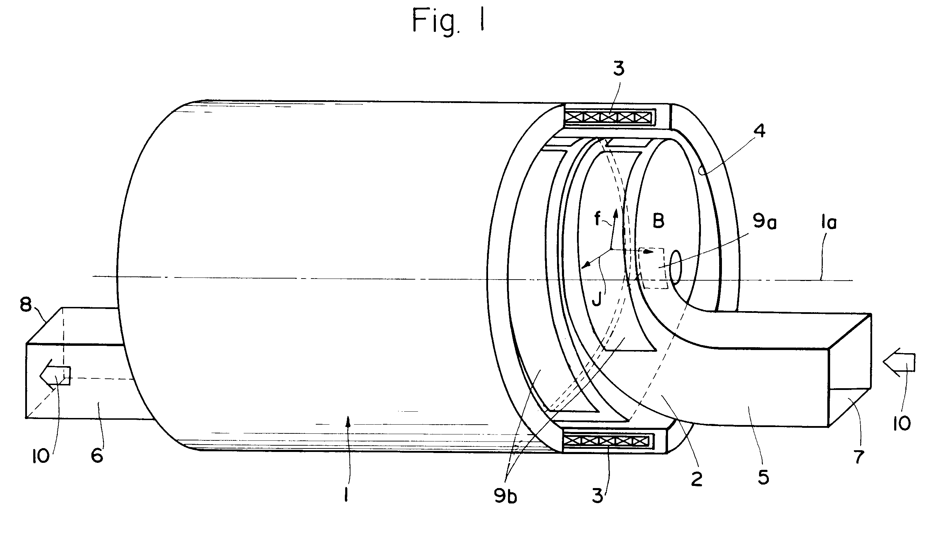

Electrodes 9a,9b are fixed at both side walls of the thrust duct 2. In the illustration of FIG.1, the anode 9a is arranged on the inner side wall of the thrust duct 2, and the cathode 9b is opposed to the cathode and is mounted on the outer side wall of the thrust duct 2 because of decreasing effective electrochemical reaction area of the cathode 9b by producing hydrogen bubbles.

In FIG.1 the reaction between the magnetic field B generated by the fixed superconducting magnet 1 in the ship and the electric current J passing through the sea water from anode 9a to cathode 9b generates a Lorentz's force f (each direction is shown by an arrow). The sea water as a conductive fluid 10 flows into a spiral portion 2 of the thrust duct 2 from the opening 7 of the inlet 5 of the thrust duct 2. In the spiral portion 2 of the thrust duct 2, the sea water 10 is pressed by the Lorentz's force f. The thrust of ship is obtained by jetting sea water from the opening 8 of the outlet 6.

Moreover, the maximum thrust is obtained when the ratio between the outer radius ro and the inner radius ri of the thrust duct is: ${\text{r}}_{\text{o}} {\text{≅ 3.5 r}}_{\text{i}}$ .

Now, introducing the electrode electric current Jₛₒ, the electrode voltage Vₛₒ, the input electric power Pₑₒ is calculated by the following equations,

${\text{J}}_{\text{so}} {\text{= j}}_{\text{c}} {\text{(2πr}}_{\text{c}} {\text{·b)n = j}}_{\text{c}} {\text{(2πr}}_{\text{c}} \text{)1}$
${\text{V}}_{\text{so}} {\text{= {(r}}_{\text{c}} {\text{·j}}_{\text{c}} {\text{)/σ} · 1n(r}}_{\text{o}} {\text{/r}}_{\text{c}} \text{)}$
${\text{P}}_{\text{eo}} {\text{= {j}}_{\text{c}} {\text{² · (r}}_{\text{c}} {\text{·j}}_{\text{c}} {\text{)/σ} · 1n(r}}_{\text{o}} {\text{/r}}_{\text{i}} \text{) (1)}$

where;
- j_{c}:: Electric current density at the reference radius r_{c} (A/m²)
- r_{c}:: Reference radius ${\text{(m²)=(r}}_{\text{o}} {\text{+r}}_{\text{i}} \text{)/2}$
- b:: Cell length of the thrust duct 2 (m)
- n:: Number of cell of the thrust duct 2
- I:: Overall length of the thrust duct 2 (m)
- s:: Sea water electric conductivity (S/m)

The Lorentz's force F_{Lo} is calculated by, 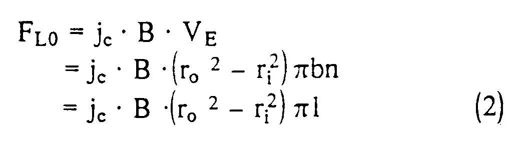
Substituting Equation (1) into Equation (2), 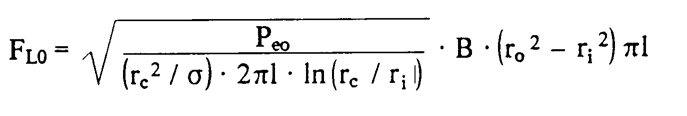
Squaring equation, 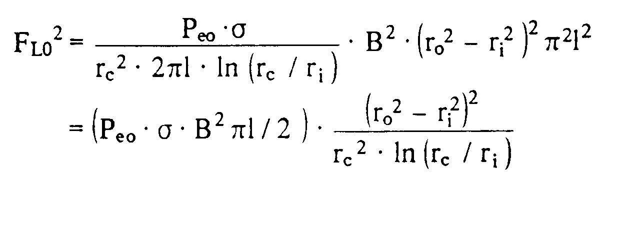
As the results, 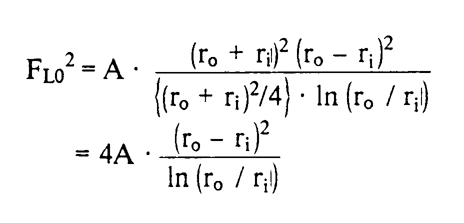
where A is defined as follows.

${\text{A=P}}_{\text{e}} \text{σB²π1/2}$

The maximum Lorentz' force is obtained when it is satisfied with the following relation.

${\text{δF}}_{\text{L0}} {\text{²/δr}}_{\text{i}} \text{=0}$

The numerical solutions are shown in TABLE 1. As the results, TABLE 1 shows that the maximum Lorentz's force is able to be gained when the thrust duct dimension is satisfied with the relation, ${\text{r}}_{\text{o}} {\text{≅ 3.5 r}}_{\text{i}}$ .

**Table 1**

| rₒ (m) | rᵢ (m) | rₒ/rᵢ | rᵢ/rₒ |
|---|---|---|---|
| 0.8 | 0.228 | 3.509 | 0.285 |
| 0.7 | 0.2 | 3.5 | 0.286 |
| 1.0 | 0.285 | 3.508 | 0.285 |
| 0.3 | 0.009 | 3.333 | 0.3 |
| 1.2 | 0.34 | 3.529 | 0.283 |
| 1.5 | 0.43 | 3.488 | 0.28 |

FIG.3 to FIG. 6 shows a semi-submerged catamaran or an extended performance hydrofoil (EPH) in which the EMTs of the present invention are used for the propulsion system. As shown in FIG.3, each EMT propulsion unit is mounted in a long, slender, submerged body. A fully-submerged foil 22 is mounted between two submerged bodies arranged by EMT propulsion units. Buoyant lift is combined with the dynamic lift of a fully-submerged foil 22 and the submerged bodies.

This foil 22 has a superconducting racetrack magnet 23 in itself and a pair of electrodes 24 are fixed on the upper surface of the foil. In FIG.6 the vector shows the forces acting upon the upper surface of the foil. The reaction between the magnetic field B of the superconducting racetrack magnet in the foil and the electric current J from the electrodes produces a Lorentz's force f along the flow steam longitudinal axis of the foil 22. The sea water upon the surface of the foil is accelerated by Lorentz's force. The flow velocity difference between the upper surface 22a and the lower surface generates a lifting force L by Bernoulli's law. The lifting force per unit length L is calculated by the following equation.

${\text{L = ρUΓ = ρU (U}}_{\text{u}} {\text{- U}}_{\text{d}} \text{) · 1 (N/m)}$

where;
- σ:: Sea water density (Kg/m³)
- U:: Absolute ship velocity (m/s)
- Γ:: Circulation (Total amount of maelstrom)
- Uu:: Flow velocity upon the foil (m/s)
- Ud:: Flow velocity under the foil (m/s)
- I:: Overall length of the foil (m)

For example, TABLE 2 shows the relation between flow velocity difference and lifting force.

**Table 2**

| | | | | |
|---|---|---|---|---|
| velocity difference ΔU | 0.5 | 1 | 1.5 | 2 |
| lifting force L | 2x10³ | 4x10³ | 6x10³ | 8x10³ |

The basic principle of the hydrofoil concept is simply to lift a ship's hull out of the water and dynamically support it on wing-like lifting surfaces hydrofoils in order to reduce the power required to attain modestly high speeds. As speed of ship is increased, the lifting force generated by the water flow over the submerged portion of the foils increases causing the ship to rise and the submerged area of the foils to decrease. For a given speed the ship will rise until the lifting force equals the weight carried by the foils. The lifting force is dependent on ship speed, hydrofoils in order to rise from water have to require large output propulsion units.

FIG.7 and FIG.8 show illustrations that two EMT propulsion units 20 are mounted in a row in the ship hull 21 to which a pair of EMT foils 25, 25 is connected.

The EMT foils system by the present invention is useful for the maneuver control of submarines.

The further description of the present invention says about calculated results for two full-scale ship models powered by EMTs, an EMT hydrofoil and an EMT vessel. In hydrofoils, fundamental characteristics are the followings;

### (1) Specifications

| | |
|---|---|
| 1. Ship displacement | 200 metric tons |
| 2. Sailing speed | 45 knots |
| 3. EMT propulsion unit | Spiral type x 2 |

### (2) Weights

| | |
|---|---|
| 1. Hull | 80 tons |
| 2. Superconducting magnet | 30x2=60 tons |
| 3. Cryogenic systems | 5 tons |
| 4. Power generator | 25 tons |
| 5. Power supply systems | 15 tons |
| 6. The others | 15 tons |

### (3) Characteristics of elemental equipments

1. Superconducting magnets

| | |
|---|---|
| Type | solenoid type |
| Magnetic field | 10 - 12 Teslas |
| Length | 6 m |
| Diameter | 1.6 m |

2. Lifting devices EMT foils shown in FIG.4
3. Power generator Fuel Cell or Gas turbine
4. Electrodes DSA
5. Hull form Semi-submerged Catamaran
6. Power supply systems Superconducting power electric circuit by conventional and high Tc superconducting materials
7. Cryogenic systems on board Helium refrigerator

The calculated results based on the data are shown in TABLE 3. TABLE 3 shows the characteristics of Boeing 922 Jetfoil that is the only commercial hydrofoil in the world. The EMT foil is gained about two times propulsive efficiency as much as Boeing Jetfoil.

**TABLE 3**

| | Boeing 922 Jetfoil | EMT foil by the present invention |
|---|---|---|
| Length (m) | 27.43 | 25 |
| Breadth(m) | 8.53 | 10 |
| Depth (m) | 2.59 | 4 |
| Gross (ton) | 162 | 280 |
| Displacement (ton) | 119 | 200 |
| Power generator | Gas turbine | Gas turbine |
| Output of power generator(KW) | 5000x2 | 5000x2 |
| propulsion system | waterjet propulsor x 2 | waterjet EMT x 2 |
| Thrust (N) | 104 | 162 |
| Propulsive efficiency | 0.23 | 0.41 |
| Ship speed (Knot) | 45 | 45 |

The calculated results for large full-scale vessel shows the followings.

### (1) Characteristics

| | |
|---|---|
| 1. Ship displacement | 5000 metric tons |
| 2. Sailing speed | 50 Knots |
| 3. EMT propulsion unit | Spiral type x 12 |

### (2) Weights

| | |
|---|---|
| 1. Hull | 2,000 tons |
| 2. Superconducting magnet | 100 x 12 = 1200 tons |
| 3. Cryogenic systems | 200 tons |
| 4. Power generator | 200 tons |
| 5. Power supply systems | 400 tons |
| 6. The others | 600 tons |

### (3) Characteristics of elemental equipments

1. Superconducting magnet

| | |
|---|---|
| Type | Solenoid |
| Magnetic field | 10 - 12 Teslas |
| Length | 15 m |
| Diameter | 5 m |

2. Lifting devices EMT foils shown in FIG.4
3. Power generator Fuel Cell or Gas turbine
4. Electrodes DSA
5. Hull form Semi-submerged Catamaran
6. Power supply systems uperconducting power electric circuit by conventional and high Tc superconducting materials
7. Cryogenic systems on board Helium refrigerator
The four rows of three pairs of superconducting EMT propulsion units 30 are arranged as shown in FIG.9. The superconducting shielding material devices 31 are mounted at both ends of two rows of EMT propulsion units, resulting in magnetic flux makes a close loop. As the results, the leakage of magnetic field is to be negligible and to increase the magnetic field. The superconducting shielding device is made by plates, thin films and coils of high Tc superconducting material or conventional superconducting material.

The present invention is suitable for the ship propulsion system by generating thrust in the horizontal direction. And it is useful for a DP Systems to produce the thrust in the horizontal and vertical directions. It is possible to be used as large sea water pumps, flowing sea water into fixed EMTs and discharging from the duct. Using the reverse principle of EMTs, it is possible to use ocean currents (MHD) for power generators.

## Claims

1. Thrust generator comprising a tubular superconducting solenoid magnet (1), a spiral thrust duct (2) inserted in the hollow interior (4) of said superconducting magnet (1) and having an inlet (5) and an outlet (6) opening (7, 8) along the longitudinal central axis (1a) of said magnet (1) on either side thereof said generator also comprising two electrodes (9a, 9b) an anode (9a) and a cathode (9b) and is
characterized by
said electrodes (9a, 9b) having the spiral shape of the thrust duct (2) and the anode (9a) being fixed continuously on an inner side wall of said thrust duct (2) and in the interior thereof and the cathode (9b) being arranged continuously on an opposite side wall facing the electromagnet and in the interior of said thrust duct (2).

2. Thrust generator according to claim 1, wherein a ratio of an outer radius (ro) to an inner radius (ri) of said thrust duct (2) is about 3.5.

3. Thrust generator according to anyone of claims 1 or 2, wherein said thrust duct (2) have a rectangular cross section.

4. Thrust generator comprising a plural thrust generators, each of which is according to claim 1, are arranged parallel to form a closed loop of a magnet flux.

5. Thrust generator comprising two rows of thrust generators, each of which is according to claim 1, and said two rows of said generators are arranged parallel with each other to form a closed loop of a magnet flux.

6. Thrust generator according to claim 4 or 5, having a superconducting shielding device at each end of said thrust generator.

## Patentansprüche

1. Schuberzeuger mit einem rohrförmigen supraleitenden Solenoid-Magneten (1), einem wendelförmigen Schubrohr (2), das in den hohlen Innenraum (4) des genannten supraleitendenden Magneten (1) eingesetzt ist und eine Einlaß- bzw. eine Auslaßöffnung (7 bzw. 8) an einem Einlaß (5) bzw. einem Auslaß (6) in Richtung der Mittellängsachse (1a) an jeweils einer Seite des genannten Magneten (1) aufweist, welcher Erzeuger außerdem zwei Elektroden (9a,9b), und zwar eine Anode (9a) und eine Katode (9b), besitzt,
dadurch gekennzeichnet, daß
die genannten Elektroden (9a,9b) die Wendelform des Schubrohrs (2) besitzen, und daß die Anode (9a) fortlaufend an einer inneren Seitenwand des genannten Schubrohrs (2) und in deren Innerem befestigt ist und die Katode (9b) fortlaufend an einer gegenüberliegenden, dem Elektromagneten zugewandten Seitenwand und in dem Inneren des genannten Schubrohrs (2) angeordnet ist.

2. Schubgenerator nach Anspruch 1, worin ein Verhältnis eines Außenradius (ro) zu einem Innenradius (ri) des genannten Schubrohrs etwa 3,5 beträgt.

3. Schubgenerator nach einem der Ansprüche 1 oder 2, worin das genannte Schubrohr (2) einen Rechteckquerschnitt hat.

4. Schubgenerator, bestehend aus einer Mehrzahl von Schubgeneratoren, von denen jeder die Merkmale des Anspruchs 1 aufweist und die parallel angeordnet sind, um eine geschlossene Bahn eines magnetischen Flusses zu bilden.

5. Schubgenerator, bestehend aus zwei Reihen Schubgeneratoren, von denen jeder die Merkmale des Anspruchs 1 aufweist, und welche genannten zwei Reihen der genannten Generatoren parallel zueinander angeordnet sind, um eine geschlossene Bahn eines magnetischen Flusses zu bilden.

6. Schubgenerator nach Anspruch 4 oder 5, mit einer supraleitenden Abschirmvorrichtung an jedem Ende des genannten Schubgenerators.

## Revendications

1. Générateur de poussée comportant un aimant solénoïde (1) tubulaire, superconducteur, un conduit de poussée (2) en spirale inséré dans l'intérieur (4) creux dudit aimant (1) superconducteur, et ayant une ouverture (7, 8) d'entrée (5) et de sortie (6) le long de l'axe central longitudinal (1a) dudit aimant (1) de chaque côté de celui-ci, ledit générateur comportant également deux électrodes (9a, 9b), une anode (9a) et une cathode (9b) et est
caractérisé en ce que
lesdites électrodes (9a, 9b) ont la forme en spirale dudit conduit de poussée (2) et l'anode (9a) étant fixée en continu sur une paroi latérale intérieure dudit conduit de poussée (2) et dans l'intérieur de celui-ci, et la cathode (9b) étant disposée en continu sur une paroi latérale opposée faisant face à l'électro-aimant et à l'intérieur dudit conduit de poussée (2).

2. Générateur de poussée selon la revendication 1, dans lequel un ratio d'un rayon extérieur (ro) par rapport à un rayon intérieur (ri) dudit conduit de poussée (2) est environ de 3.5.

3. Générateur de poussée selon l'une quelconque des revendications 1 ou 2, dans lequel le conduit de poussée (2) présente une section transversale rectangulaire.

4. Générateur de poussée comportant plusieurs générateurs de poussée dont chacun est conforme à la revendication 1, et sont disposés parallèlement pour former une boucle fermée d'un flux magnétique.

5. Générateur de poussée comportant deux rangées de générateurs de poussée dont chacune est conforme à la revendication 1, et lesdites deux rangées desdits générateurs sont disposées parallèlement l'une par rapport à l'autre pour former une boucle fermée d'un flux magnétique.

6. Générateur de poussée selon les revendications 4 ou 5, ayant un dispositif de blindage superconducteur à chaque extrémité dudit générateur de poussée.
